# EUROPEAN PATENT SPECIFICATION

(11) **EP 2 980 462 B1**
(45) Date of publication and mention of the grant of the patent: **20.09.2017**
(21) Application number: 15179069.8
(22) Date of filing: 30.07.2015
(51) Int. Cl.: F16K 17/34, F24D 3/10, F24D 19/08

(54) **PRESSURE MANAGEMENT SYSTEM**
DRUCKVERWALTUNGSSYSTEM
SYSTÈME DE GESTION DE PRESSION

(30) Priority: 02.08.2014 GB 201413795; 27.01.2015 GB 201501309
(43) Date of publication of application: 03.02.2016
(73) Proprietor: Foster, Robert, Formby, Merseyside L37 3HL (GB)
(72) Inventor: Foster, Robert, Formby, Merseyside L37 3HL (GB)
(74) Representative: Bartle Read

(56) References cited:
- EP-A1- 0 972 995
- EP-A1- 2 778 560
- EP-A2- 1 780 472
- DE-A1-102012 107 594
- DE-U1-202006 017 758
- DE-U1-202008 003 055
- DE-U1-202010 005 309
- US-A- 5 960 818

## Description

The present invention relates to management of pressure in a heating system.

In a central heating system for a building there is typically a boiler which heats water for supply through a network of pipes to multiple heat exchange devices such as radiators. Water pressure in this system needs to be maintained in a certain range. Excessive pressure may lead to leaks and failures; inadequate pressure can prevent the boiler from operating correctly. Heating boilers typically have a cut off device which shuts them down if pressure falls below a certain threshold.

Some central heating systems use an elevated header tank to maintain system pressure. The header tank is located well above the boiler itself (e.g. in a building's loft space) and connected to the boiler so that it can supply water to it and can also receive water from it, e.g. when the water in the system expands upon heating. These so-called open-vented systems are able to top themselves up automatically with water - a simple float valve regulates water level in the header tank, topping it up when necessary by admitting cold water from the mains supply, and the header tank supplies water to the remainder of the system.

Sealed central heating systems do not use a header tank to maintain pressure. A sealed system is raised to its operating pressure by admitting water through a connection to the mains supply. This connection is then closed off and an expansion vessel provides compliance in the system to maintain pressure despite factors such as the water's variation of volume with temperature. Boilers of the type referred to in the UK as "combination" or "combi" use a sealed heating system, and have been widely adopted. Because combi boilers do not require an elevated header tank their installation can be somewhat simplified.

Sealed central heating systems typically require occasional topping up with water to maintain system pressure. A degree of leakage inevitably takes place. The volume of water in the system thus reduces over time and pressure gradually falls. To remedy this, pressurised water from the mains supply needs to be introduced to raise the system pressure, and typically this is a manual operation. There is a pressure gauge indicating system pressure which the operator should periodically check. If the pressure is low then, in domestic heating systems, the normal procedure involves connecting a "filling loop" - often a length of flexible conduit - between a mains water outlet and a heating system inlet. Opening valves on the inlet and outlet then allows water to be supplied to the system and the operator watches the pressure gauge as it rises. Once the gauge indicates a suitable pressure, the valves are switched off and the filling loop should be disconnected.

Failure to correctly follow this procedure is a very common cause of problems with sealed and pressurised heating systems. For example if inspection of system pressure is simply neglected, the pressure will over time fall to a level at which safe boiler operation cannot be sustained and the boiler automatically shuts down. This may lead to many on-site visits by maintenance engineers.

One reason why system pressurisation is typically a manual operation relates to the risk of backflow from the heating system to the mains water supply. Water in the heating system typically contains an additive referred to as "inhibitor" which resists corrosion and deposit of limescale in the heating system. It is also subject to contamination - when heating systems are drained a black sludge is typically observed to be present in the water. This results in part from the water's repeated circulation through heated metal conduits, causing metals to be dissolved in it. If contaminated heating system water were inadvertently introduced into the mains supply there could be a health hazard.

Regulations require that steps should be taken to prevent this from happening. The use of a removable filling loop, in conjunction with an arrangement of two one-way valves arranged to allow water flow only in the direction from the mains to the heating system, is considered to be compliant with these regulations. Disconnection of the filling loop after use ensures that there would be no back flow to the mains supply even if the one-way valves were to fail (although in practice many users leave the filling loop connected, reducing security against back-flow).

It would be desirable to provide for automatic pressure maintenance in a sealed and pressurised heating system, but doing so involves solving at least two problems.

Firstly if a connection is to be automatically made between the mains water supply and the heating system then adequate protection must be provided against backflow through that connection.

Secondly there is the risk of flooding in a building in the event of major leakage from the heating system. Such a leakage would of course cause a drop in system pressure. If an automatic pressure regulator were to respond to this circumstance by an uncontrolled input of water to the system then a large volume of water could be released.

One existing product for managing heating system pressure is sold in the UK under the registered trade mark Mikrofill by Mikrofill Systems Ltd and takes the form of a wall mounted unit controlled by a microprocessor. It has a pair of electrically operated valves that open and close under direction of the microprocessor in response to pressures sensed by electronic transducers. In response to low system pressure a first valve is opened to connect mains water to the heating system via an internal chamber. When the sensed pressure reaches a required level the first valve is closed and a second valve is opened to exhaust the internal chamber through a tundish to a drain pipe. The internal chamber then provides an air gap between the heating system and the mains water supply, giving protection against backflow. Due to its use of electronic pressure sensors, electrically operated valves, microprocessor control and a dedicated drain pipe, this unit is relatively expensive to purchase and complex to install. A pressure management device according to the preamble of claim 1 is known from document DE 20 2008 003 055 U1.

EP 2778560 A1 (Sasserath & Co KGH) discloses a device for filling a heating system in which an electrically driven shut-off valve is controlled in response to a signal from an outlet pressure signal. The device additionally incorporates a turbine carrying a magnet whose movement is detected by means of a reed switch to provide an electrical signal indicative of flow and enable a control unit to respond suitably. The device may have a transceiver for connection to a central server via the Internet. This is therefore a relatively elaborate and complex device.

According to the present invention there is a pressure management device for use with a heating system, the pressure management device comprising:
an inlet for connection to a mains water supply;
an outlet for connection to a heating system;
a fluid flow path between the inlet and the outlet;
a one-way valve disposed in the fluid flow path and arranged to permit flow in the direction from the inlet toward the outlet and to resist flow in the opposite direction;
and being characterised in that it further comprises
a pressure reducing valve which is disposed in the fluid flow path and is configured to respond to an outlet pressure of the pressure management device, the pressure reducing valve having a valve member which is urged in opposite directions by (a) a pre-stressed spring and (b) the outlet pressure, the pressure reducing valve being normally maintained in a closed state by the outlet pressure but adapted to open when the outlet pressure falls below a threshold; and
a flood prevention device which is disposed in the fluid flow path and comprises an impeller which is turned by passage of water through the fluid flow path and a mechanism driven by the impeller to count rotations of the impeller and to close a valve to block the fluid flow path when a predetermined number of impeller rotations have taken place.

Because the outlet is connected to the heating system in use, the pressure reducing valve serves to monitor heating system pressure and to open when that pressure falls below the threshold to top up the heating system when necessary. If there were a major leakage from the heating system, however, pressure in it could not be sustained, creating the danger that the pressure reducing valve might provide an uncontrolled flow of water into the heating system with consequent risk of flooding or water damage to the building. This risk is obviated by the flood prevention device, which can close in such an event to block supply of water. In certain embodiments the components of the pressure management system can also all assist in providing security against backflow of fluid from the heating system to the mains water supply. Hence the components cooperate in providing a pressure management device which serves to suitably sustain the heating system pressure without danger of flooding or of backflow and they can do so without need of any electronic control or electrical actuation.

A specific embodiment of the present invention will now be described, by way of example only, with reference to the accompanying drawings, in which:
Figure 1 is a schematic representation of a pressure management device embodying the present invention;
Figure 2 is a section in a longitudinal plane through a pressure reducing valve used in an embodiment of the present invention;
Figure 3 is a somewhat simplified and schematic section in a longitudinal plane through a flood prevention device used in an embodiment of the present invention; and
Figure 4 is an illustration of a pressure management device embodying the present invention, viewed from one side.

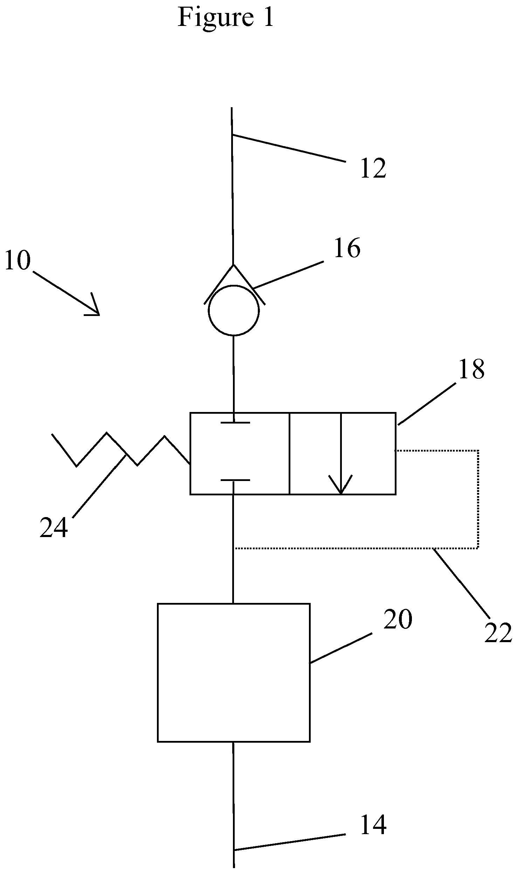

Looking at Figure 1, the illustrated pressure management device 10 has an inlet 12 for connection to a mains water supply and an outlet 14 for connection to a heating system. A fluid flow path is provided between the inlet and the outlet and incorporates a one-way valve (non-return valve) 16, a pressure reducing valve 18, and a flood prevention device 20 connected in flow series with one another. That is, to pass from the inlet to the outlet water must flow through all three of these components.

The one-way valve 16 is connected directly to the inlet 12, according to the present embodiment, and is oriented such as to permit flow in the direction from the inlet to the outlet but to block flow in the opposite direction. In this way it contributes to protection against backflow of potentially contaminated water from the heating system into the mains water supply.

The pressure reducing valve 18 is sensitive to pressure on its outlet side - that is, on the side of the valve lying toward the outlet 14. As depicted, the outlet pressure is applied through a passage 22 to a valve member and acts in opposition to a pre-stressed spring 24. Sufficient pressure on the outlet side of the pressure reducing valve 18 maintains it in the illustrated state in which it is closed and thus blocks fluid flow between the inlet 12 and the outlet 14. If the pressure on the outlet side falls lower than a predetermined threshold, the spring 24 dominates, moving the valve member to its open position to permit fluid flow. The effect is to provide closed loop control of the outlet pressure, maintaining it at (or above) a required level. In some embodiments the degree to which the spring 24 is pre-stressed can be varied to enable adjustment of the threshold outlet pressure at which the pressure reducing valve 18 opens.

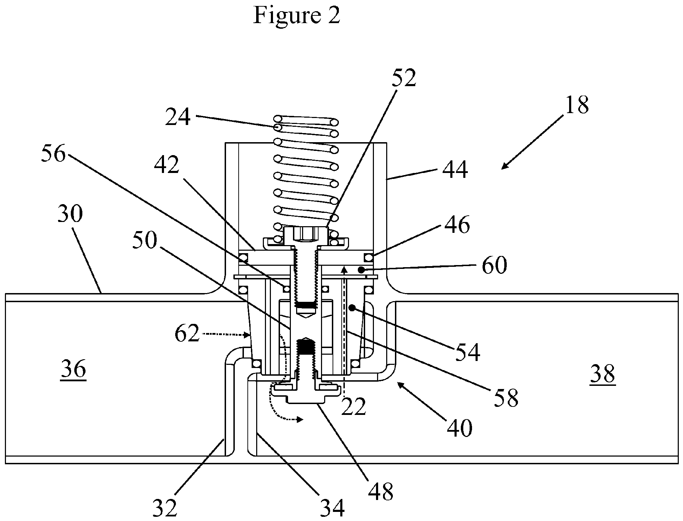

The construction of a suitable pressure reducing valve 18 is known to the skilled person but an example is provided in Figure 2 and comprises a tubular body 30 which is divided by internal walls 32, 34 to form an inlet chamber 36 and an outlet chamber 38. The inlet chamber 36 is connected to the one-way valve 16 (see Figure 1) and thus supplied with water at the mains supply pressure. The outlet chamber 38 is connected to the flood prevention device 20. Valve arrangement 40 controls communication between the inlet and outlet chambers 36, 38 and is actuated by a piston 42 which is movable along a cylinder 44 formed by an elbow of the tubular body 30 and which seals against the cylinder's internal wall by virtue of an "O" ring 46. The piston 42 is coupled to a valve head 48 via a stem 50, the valve head 48 being screwed into the stem 50 and the piston 42 being secured to it by a bolt 52. The stem 50 passes through a plug 54, forming a sliding seal with it by virtue of an "O" ring 56 surrounding the stem 50. Passages 58 through the plug 54 supply fluid at the pressure of outlet chamber 38 to a working chamber defined within the cylinder 44 by the piston 42. A dashed arrow 22 indicates one of the paths taken by the fluid to enter the working chamber 60. In this way a force proportional to the valve's outlet pressure is applied to the piston 42. This force is opposed by spring 24 acting upon the piston 42.

Figure 2 shows the pressure reducing valve 18 in its open configuration. Pressure in the outlet chamber 38 is below the predetermined threshold. The spring 24 overcomes the fluid pressure in working chamber 60 and as a result the assembly formed by the piston 42, valve head 48 and stem 50 is (as viewed in the drawing) at the lower end of its travel. Valve head 48 is thus separated from a valve seat formed by an adjacent portion of the wall 34, enabling fluid to flow from the inlet chamber 36 to the outlet chamber 38 along a path indicated by a dashed arrow 62.

When pressure in the outlet chamber 38 (and in the working chamber 60) becomes sufficiently large, the piston 60 moves upwards (as viewed in the drawing) against the force of the spring 24, drawing the valve working head 48 against its seat. The path 62 is thus closed and flow through the valve 18 is blocked.

The flood prevention device 20 is sensitive to the volume of water that flows during any single period of flow. In response to excessive flow during any flow period it closes and remains closed until it is reset, in this way providing protection against excessive release of water in the event that the heating system develops a leak.

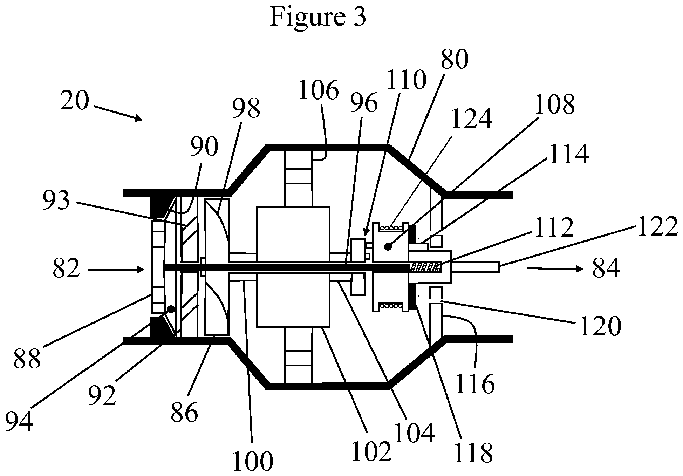

Suitable flood prevention devices are commercially available but Figure 3 illustrates - in highly schematic form - a suitable mechanism having a housing 80 defining a fluid input 82 and an output along a direction indicated by an arrow 84. An impeller 86 is driven to rotate by fluid passing through the housing 80 and the mechanism effectively counts rotations of the impeller 86 and closes a valve, blocking fluid flow, when a certain number of rotations have taken place.

Looking at the mechanism in more detail, there is a shaft carrier 88 which is retained between a frusto-conical lip 90 of the housing 80 and a plate 92 which is immovably mounted in the housing 80. The shaft carrier 88 has a frusto-conical portion 94 which is adjacent and complementary to the lip 90, and these parts together form a non-return valve, since flow in the direction from outlet 84 to inlet 82 would cause the shaft carrier 88 to seat upon the lip 90 and so block subsequent flow in that direction. In this way the flood prevention device 20 of the present embodiment contributes to security against backflow through the pressure management device 10.

The plate 92 is penetrated by through-going openings 93 to allow fluid flow in the correct direction and these are seen in the drawing to be inclined to the axis of the device to create rotary circulation of the water striking the impeller 86, improving its effectiveness.

A shaft 96 is carried by and secured to the shaft carrier 88. The impeller 86 is carried upon and mounted by the shaft 96 but rotatable about it, and has inclined vanes 98 upon which the fluid flow acts, turning both the impeller 86 and a rotary input 100 to a reduction gear mechanism 102, represented in Figure 3 simply by a box for the sake of simplicity. The reduction gear mechanism 102 provides a large speed reduction between its input 100 and output 104 and may for example do so by means of first and second of worm drives (not shown) one of which drives the other. The reduction gear mechanism is anchored to the housing 80 by a flange 106 having through-going openings to permit fluid flow.

The output 104 of the reduction gear mechanism drives an index head 108 through a toothed drive arrangement 110. The index head 108 has a blind bore receiving an end portion of the shaft 96, being thereby rotatably mounted on the shaft, and a spring 112 is also contained in the blind bore, being compressed between the base of the bore and the end of the shaft 96. The spring thus serves to urge the index head 108 in the direction of fluid flow (toward the right in the drawing) but its movement in that direction is normally prevented by abutment of a key or spline 114 carried by the index head 108 against an end plate 116 immovably mounted in the housing 80. However the end plate 116 has a slot or keyway (not seen in the drawing) which is able to receive the key 114 when the index head is turned to bring the key into alignment with the keyway. When this happens the index head 108 is moved by the spring 112 toward the end plate 116 until a face seal 118 carried by the index head 108 abuts the end plate 116, closing flow openings 120 in the end plate 116 and thus preventing subsequent flow.

The flood prevention device 20 functions as follows. Normally its configuration is as shown in Figure 3. The key 114 is misaligned from its keyway and maintains separation between the face seal 118 and the end plate 116 so that the device permits fluid flow in the forward direction 84. Very low rates of flow-such as might be created in response to weeping of joints or valves in the heating system -do not cause the impeller 86 to turn. In response to higher rates of flow the impeller turns at a relatively high rotary speed and the index head 108 is driven through the reduction gear mechanism 102 at a much lower rotary speed. When the index head 108 has turned through a predetermined angle (which is less than 360 degrees) the key 114 is brought into alignment with its keyway and the spring 112 advances the index head 108, blocking subsequent flow. In this way fluid flow is shut off after a certain number of revolutions of the impeller 86, which broadly corresponds to a certain volume throughput of fluid.

To reset the device a flood prevention device 20 a button 122 is pushed. The button is not directly accessible, being within the fluid flow path, but is acted upon by a manually operable slider mechanism (not shown in this simplified drawing). In this way the key 114 is disengaged from its keyway. This, and the toothed drive arrangement 110 which is at that stage disengaged, permit the index head 108 to rotate back to its original angular position under the influence of a light torsion spring 124 disposed around the index head 108 (and anchored to the housing 80 in a manner not shown in the drawing).

Also when flow ceases the torsion spring 124 returns the index head to its original angular position, resetting the device. Thus the device serves to monitor and respond to the volume throughput of fluid during one continuous period of flow.

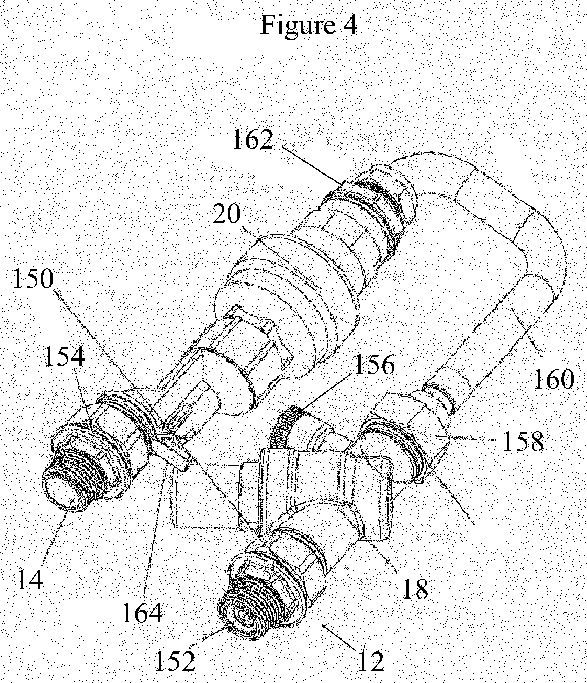

The physical embodiment of the invention illustrated in Figure 4 is intended for a domestic heating system, although the invention has potential applications in other heating systems.

The inlet 12 is formed as an externally threaded, flanged connector intended to receive an end fitting of a flexible tube (which is not shown) leading to the mains water supply. A seal 150, formed in the illustrated embodiment of EPDM rubber, resists leakage where the inlet 12 is screwed to the pressure reducing valve 18. The one-way valve 16 is formed within the inlet connector 12 and part of its mechanism can be seen in the drawing at 152. The inlet connector 12 is an off-the-shelf item and its internal construction need not be described here.

The outlet 14 is a further externally threaded, flanged connector screwed to the flood prevention device 20, a further seal 154 serving to resist leakage at this junction. The outlet connector 14 differs from the inlet in having no valve within it. It is to be connected to a fill point of the associated heating system, typically through a length of flexible conduit.

Figure 4 shows the pressure reducing valve 18 to have adjustment knob 156 which can be turned to adjust the stress upon the valve's spring 24 (not seen in Figure 4- refer in this regard to Figure 2) and so vary the outlet pressure threshold at which the pressure reducing valve 18 opens. It is not expected that users will normally need to make any adjustment and this feature may be dispensed with in other embodiments.

The pressure reducing valve 18 connects through a compression fitting 158 to a roughly "U" shaped conduit 160, fabricated with copper piping in this embodiment, leading via another compression fitting 162 to the flood prevention device 20. It was mentioned above that the flood prevention device 20 is able to be reset by means of a slider mechanism. Figure 4 shows a reset button 164 which is part of the slider mechanism and is to be manually depressed to cause the flood prevention device 20 to be reset (re-opened) after it has closed in response to excessive throughput of water.

The generally "U" shaped form of the illustrated pressure management device 10 allows it to be conveniently packaged in a protective housing (not shown) and to provide parallel inlet and outlet connectors 12, 14. The device may conveniently be wall-mounted near to the heating boiler and connected to it and to the mains water supply through flexible conduits. Incorporating the pressure management device 10 is thus a simple operation for the professional or for the home-owner. Other configurations are possible. The device's components could for example be arranged along a straight line with the inlet and outlet connectors 12, 14 being roughly co-axial and facing in opposite directions.

In operation the inlet 12 is normally at higher pressure than the outlet 14. The inlet 12 receives mains water pressure, which may for example be in the region of 350 kPa. The outlet 14 is at the pressure of the heating system. Typically this needs to be maintained around 150 kPa and the pressure reducing valve may be set to open when its outlet pressure falls below that value. Provided that the heating system is operating normally, with no major leaks, the pressure reducing valve 18 will be closed for most of the time. However, should pressure in the heating system fall below the threshold value of 150 kPa, e.g. because of gradual water loss over time, or because the radiators are bled, then the pressure reducing valve 18 will open, causing the one-way valve 16 also to open. Mains water flows through the pressure management device 10 into the heating system, raising its pressure, and continues until the heating system pressure is sufficient to close the pressure reducing valve 18, at which point water flow stops and the one-way valve 16 also closes. The outlet pressures at which opening and closing of the pressure reducing valve 18 take place may differ slightly due to valve hysteresis.

Thus the pressure reducing valve serves to top up the heating system fluid as necessary to sustain its pressure.

Because the pressure management device 10 constantly monitors the heating system pressure and responds with little delay to a fall in it, the volume of water supplied during any single fill event (i.e. between opening and closing of the pressure reducing valve 18) is not expected to be large. If the volume of water passed during a fill event is large, this is likely to be due to a leak downstream of the pressure management device 10, e.g. in the heating system itself. The flood prevention device 20 responds to any fill event involving more than a pre-set throughput (say 3 litres) by closing, thus preventing uncontrolled release of water from the mains supply.

The one-way valve 16, the pressure reducing valve 18 and the flood prevention device 20 thus cooperate in ensuring that (a) heating system pressure is maintained at or somewhat above the required value, and (b) uncontrolled flooding in the event of a heating system leak is prevented; and (c) no backflow of heating system water to the mains supply takes place, even if the supply pressure should fall for some reason below the heating system pressure.

Numerous variations and alterations can be made to the device without departing from the scope of the invention. For example a pressure gauge sensitive to the outlet pressure may be incorporated.

## Claims

1. A pressure management device (10) for use with a heating system, the pressure management device comprising:
an inlet (12) for connection to a mains water supply;
an outlet (14) for connection to a heating system;
a fluid flow path between the inlet and the outlet;
a one-way valve (16) disposed in the fluid flow path and arranged to permit flow in the direction from the inlet toward the outlet and to resist flow in the opposite direction; a pressure reducing valve (18) which is disposed in the fluid flow path; and
and a flood prevention device (20) which is disposed in the fluid flow path and comprises an impeller (86) which can be turned by passage of water through the fluid flow path and a mechanism (100, 102,104,108,110, 112,114) driven by the impeller to count rotations of the impeller,
the pressure management device being further **characterized in that** the pressure reducing valve (18) is configured to respond to an outlet pressure of the pressure management device, the pressure reducing valve having a valve member (42, 46, 48, 50) which is urged in opposite directions by a pre-stressed spring (24) and the outlet pressure, the pressure reducing valve being normally maintained in a closed state by the outlet pressure but adapted to open when the outlet pressure falls below a threshold; and **in that** the mechanism (100, 102, 104, 108, 110, 112, 114) is configured to close a valve (116, 118) to block the fluid flow path when a predetermined number of impeller rotations have taken place.

2. A pressure management device as claimed in claim 1 in which fluid travelling along the fluid flow path passes through the one-way valve (16), then through the pressure reducing valve (18), then through the flood prevention device (20).

3. A pressure management device as claimed in claim 1 or claim 2 in which the fluid flow path is substantially "U" shaped and the inlet (12) and the outlet (14) face along substantially the same direction.

4. A pressure management device as claimed in any preceding claim in which the flood prevention device (20) is configured to close in the event that volume of water passing through it in any single fill event exceeds a predetermined threshold.

5. A pressure management device as claimed in claim 5 in any preceding claim in which the flood prevention device further comprises a reducing gear mechanism (102) having an input which is turned by the impeller.

6. A pressure management device as claimed in claim 5 in which the flood prevention device has an indexing mechanism (108, 114) driven by the output and configured to close the flood prevention device to passage of fluid when the indexing mechanism reaches a predetermined angular position.

7. A pressure management device as claimed in any preceding claim in which the flood prevention device comprises a further non-return valve.

8. A pressure management device as claimed in claim 7 in which the further non-return valve comprises a movable shaft carrier (88) which serves as a valve member and which carries a shaft (96) on which the impeller is mounted.

9. A pressure management device as claim in any preceding claim in which the pressure reducing valve (18) and the flood prevention device (20) are mechanical devices without any electrical or electronic actuation or control.

10. A heating system provided with a pressure management device as claimed in any preceding claim.

## Patentansprüche

1. Druckverwaltungsvorrichtung (10) zur Verwendung mit einen Heizsystem, wobei die Druckverwaltungsvorrichtung umfasst:
einen Einlass (12) zur Verbindung mit einer Hauptwasserversorgung;
einen Auslass (14) zur Verbindung mit einem Heizsystem;
einen Fluidströmungsweg zwischen dem Einlass und dem Auslass;
ein Einwegventil (16), das in dem Fluidströmungsweg angeordnet ist und das angeordnet ist, um Strömung in der Richtung von dem Einlass zu dem Auslass zu erlauben und einer Strömung in der entgegengesetzten Richtung zu wiederstehen;
ein Druckminderungsventil (18), das in dem Fluidströmungsweg angeordnet ist; und
eine Überschwemmungsvermeidungsvorrichtung (20), die in dem Fluidströmungsweg angeordnet ist und die einen Impeller (86), der durch Durchgang von Wasser durch den Fluidströmungsweg gedreht werden kann, und einen Mechanismus (100, 102, 104, 108, 110, 112, 114), der von dem Impeller angetrieben wird, um die Umdrehungen des Impellers zu zählen, aufweist,
wobei die Druckverwaltungsvorrichtung weiter **dadurch gekennzeichnet ist, dass**
das Druckminderungsventil (18) konfiguriert ist, um auf einen Auslassdruck der Druckverwaltungsvorrichtung zu reagieren, wobei das Druckminderungsventil ein Ventilelement (42, 46, 48, 50) umfasst, das von einer vorgespannten Feder (24) und den Auslassdruck in entgegengesetzte Richtungen gedrückt wird, wobei das Druckminderungsventil normalerweise in einem geschlossenen Zustand gehalten wird, jedoch ausgebildet ist, um zu Öffnen, wenn der Auslassdruck unter einen Schwellenwert fällt; und
dadurch, dass
der Mechanismus (100, 102, 104, 108, 110, 112, 114) konfiguriert ist, um ein Ventil (116,118) zu schließen, um den Fluidströmungsweg zu blockieren, wenn eine vorbestimmte Anzahl von Impeller Umdrehungen stattgefunden hat.

2. Druckverwaltungsvorrichtung nach Anspruch 1, wobei Fluid, das sich entlang des Fluidströmungswegs bewegt, durch das Einwegventil (16), dann durch das Druckminderungsventil (18), dann durch die Überschwemmungsvermeidungsvorrichtung (20) hindurchgeht.

3. Druckverwaltungsvorrichtung nach Anspruch 1 oder 2, wobei der Fluidströmungsweg im Wesentlichen "U"-förmig ist und der Einlass (12) und der Auslass (14) im Wesentlichen in die gleiche Richtung zeigen.

4. Druckverwaltungsvorrichtung nach einem der vorstehenden Ansprüche, wobei die Überschwemmungsvermeidungsvorrichtung (20) konfiguriert ist, um in dem Fall, in dem ein Volumen von Wasser, das durch diese bei einem einzelnen Füllereignis hindurchgeht, einen vorbestimmten Schwellenwert überschreitet, zu schließen.

5. Druckverwaltungsvorrichtung nach Anspruch 5, wobei die Überschwemmungsvermeidungsvorrichtung weiter einen Untersetzungsgetriebemechanismus (102) mit einem Einlass, der von dem Impeller gedreht wird, umfasst.

6. Druckverwaltungsvorrichtung nach Anspruch 5, wobei die Überschwemmungsvermeidungsvorrichtung einen Schaltmechanismus (108, 114) aufweist, der von dem Auslass angetrieben wird, und der konfiguriert ist, um die Überschwemmungsvermeidungsvorrichtung für den Durchgang von Fluid zu schließen, wenn der Schaltmechanismus eine vorbestimmte Winkelposition erreicht.

7. Druckverwaltungsvorrichtung nach einem der vorstehenden Ansprüche, wobei die Überschwemmungsvermeidungsvorrichtung ein weiteres Rückschlagventil umfasst.

8. Druckverwaltungsvorrichtung nach Anspruch 7, wobei das weitere Rückschlagventil einen bewegbaren Wellenträger (88) umfasst, der als ein Ventilelement dient und der eine Welle (96) trägt, auf der der Impeller befestigt ist.

9. Druckverwaltungsvorrichtung nach einem der vorstehenden Ansprüche, wobei das Druckminderungsventil (18) und die Überschwemmungsvermeidungsvorrichtung (20) mechanische Vorrichtungen sind, ohne jegliche elektronische oder elektronische Betätigung oder Steuerung.

10. Heizsystem, das mit einer Druckverwaltungsvorrichtung nach einem der vorstehenden Ansprüche versehen ist.

## Revendications

1. Dispositif de gestion de pression (10) destiné à être utilisé avec un système de chauffage, le dispositif de gestion de pression comprenant :
une entrée (12) pour un raccordement à un réseau de distribution d'eau ;
une sortie (14) pour un raccordement à un système de chauffage ;
un chemin d'écoulement de fluide entre l'entrée et la sortie ;
un clapet anti-retour (16) disposé dans le chemin d'écoulement de fluide et conçu pour permettre un écoulement dans la direction allant de l'entrée à la sortie et pour résister à un écoulement dans la direction opposée ;
une soupape de réduction de pression (18) qui est disposée dans le chemin d'écoulement de fluide ; et
et un dispositif de prévention d'inondation (20) qui est disposé dans le chemin d'écoulement de fluide et qui comprend une roue à aubes (86) qui peut être tournée par le passage de l'eau à travers le chemin d'écoulement de fluide et un mécanisme (100, 102, 104, 108, 110, 112, 114) entraîné par la roue à aubes pour compter les rotations de la roue à aubes,
le dispositif de gestion de pression étant **caractérisé en outre en ce que**
la soupape de réduction de pression (18) est conçue pour répondre à une pression de sortie du dispositif de gestion de pression, la soupape de réduction de pression comportant un élément de soupape (42, 46, 48, 50) qui est pressé dans des directions opposées par un ressort précontraint (24) et la pression de sortie, la soupape de réduction de pression étant normalement maintenue dans un état fermé par la pression de sortie, mais étant conçue pour s'ouvrir lorsque la pression de sortie descend en dessous d'un seuil ; et
**en ce que** le mécanisme (100, 102, 104, 108, 110, 112, 114) est conçu pour fermer une vanne (116,118) pour bloquer le chemin d'écoulement de fluide lorsqu'un nombre prédéfini de rotations de roue à aubes s'est produit.

2. Dispositif de gestion de pression selon la revendication 1, dans lequel le fluide se déplaçant le long du chemin d'écoulement de fluide passe à travers le clapet anti-retour (16), puis à travers la soupape de réduction de pression (18), puis à travers le dispositif de prévention d'inondation (20).

3. Dispositif de gestion de pression selon la revendication 1 ou la revendication 2, dans lequel le chemin d'écoulement de fluide est sensiblement en forme de « U » et l'entrée (12) et la sortie (14) sont orientées le long d'une direction essentiellement identique.

4. Dispositif de gestion de pression selon l'une quelconque des revendications précédentes, dans lequel le dispositif de prévention d'inondation (20) est conçu pour se fermer dans l'éventualité où un volume d'eau passant à travers celui-ci au cours d'un quelconque événement de remplissage unique dépasse un seuil prédéfini.

5. Dispositif de gestion de pression selon l'une quelconque revendication précédente, dans lequel le dispositif de prévention d'inondation comprend en outre un mécanisme d'engrenage de réduction (102) comportant une entrée qui est tournée par la roue à aubes.

6. Dispositif de gestion de pression selon la revendication 5, dans lequel le dispositif de prévention d'inondation possède un mécanisme d'indexage (108, 114) entraîné par la sortie et conçu pour fermer le dispositif de prévention d'inondation au passage de fluide lorsque le mécanisme d'indexage atteint une position angulaire prédéfinie.

7. Dispositif de gestion de pression selon l'une quelconque des revendications précédentes, dans lequel le dispositif de prévention d'inondation comprend un clapet anti-retour supplémentaire.

8. Dispositif de gestion de pression selon la revendication 7, dans lequel le clapet anti-retour supplémentaire comprend un support d'arbre mobile (88) qui sert d'élément de soupape et qui supporte un arbre (96) sur lequel est montée la roue à aubes.

9. Dispositif de gestion de pression selon l'une quelconque revendication précédente, dans lequel la soupape de réduction de pression (18) et le dispositif de prévention d'inondation (20) sont des dispositifs mécaniques dépourvus d'actionnement ou commande électrique ou électronique.

10. Système de chauffage pourvu d'un dispositif de gestion de pression selon l'une quelconque des revendications précédentes.
